# EUROPÄISCHE PATENTSCHRIFT

(11) **EP 1 083 099 B1**
(45) Veröffentlichungstag und Bekanntmachung des Hinweises auf die Patenterteilung: **16.06.2004**
(21) Anmeldenummer: 00115814.6
(22) Anmeldetag: 22.07.2000
(51) Int. Cl.: B60R 19/48

(54) **Halteeinrichtung für einen Ultraschallwandler an einem Aussenteil eines Kraftfahrzeuges**
Device for holding an ultrasonic transducer on an exterior part of a vehicle
Dispositif support d'un transducteur ultrasonique sur une pièce extérieure d'un véhicule

(30) Priorität: 10.09.1999 DE 19943293
(43) Veröffentlichungstag der Anmeldung: 14.03.2001
(73) Patentinhaber: Dr.Ing. h.c.F. Porsche Aktiengesellschaft, 70435 Stuttgart (DE)
(72) Erfinder: Rinklin, Gerhard, 75233 Tiefenbronn (DE)

(56) Entgegenhaltungen:
- DE-A- 19 601 987
- DE-A- 19 621 964
- DE-A- 19 719 519
- DE-A- 19 819 698

## Beschreibung

Die Erfindung betrifft eine Halteeinrichtung für einen Ultraschallwandler an einem Außenteil eines Kraftfahrzeuges gemäß dem Oberbegriff des Patentanspruches 1.

Aus der DE 38 12 182 A1 geht ein in einem Gehäuse aufgenommener Ultraschallwandler für ein Kraftfahrzeug hervor, wobei das Gehäuse von der Außenseite des Stoßfängers her in eine Öffnung des Stoßfängers eingesetzt ist und sich mit einem umlaufenden randseitigen Flansch am Stoßfänger abstützt. Das Gehäuse ist im unteren Bereich über eine Steckverbindung und im oberen Bereich über ein federndes Befestigungselement mit dem Stoßfänger verbunden.

Dieser Anordnung haftet der Nachteil an, daß zur Unterbringung der Ultraschallwandler relativ großflächige Gehäuse bzw. Öffnungen am Stoßfänger vorgesehen sind, die viel Bauraum beanspruchen und aufgrund ihrer Größe stylistisch störend wirken.

Die DE 196 01 987 A offenbart eine gattungsgemäße Halteeinrichtung für einen Ultraschallwandler an einem Außenteil eines Kraftfahrzeugs, insbesondere an einem Stoßfänger, wobei am Außenteil im Bereich jedes Ultraschallwandlers eine Öffnung vorgesehen ist. Die Halteeinrichtung umfaßt eine sich benachbart der Öffnung erstreckende, zumindest an der Innenseite des Außenteils befestigte Halteplatte mit einem angeformten hohlkörperartigen Aufnahmeabschnitt, in den ein Ultraschallwandler eingesetzt und dort lösbar befestigt ist.

Aufgabe der Erfindung ist es, eine Halteeinrichtung für einen Ultraschallwandler an insbesondere nahezu glattflächigem aus thermoplastischem Kunststoff gefertigten Außenteilen eines Kraftfahrzeuges zu schaffen, die relativ wenig Bauraum beansprucht, optisch möglichst unauffällig ist und außerdem eine einfache und schnelle Montage des Ultraschallwandlers gewährleistet. Ferner soll eine einfache und qualitativ gute Reparatur- bzw. Sonderfarbenlackierung des Außenteiles sowie des Adapter-Endbereiches (Trennfuge) erzielt werden.

Erfindungsgemäß wird diese Aufgabe durch die Merkmale des Anspruchs 1 gelöst. Weitere, die Erfindung in vorteilhafter Weise ausgestaltende Merkmale sind in den Unteransprüchen enthalten.

Die mit der Erfindung hauptsächlich erzielten Vorteile sind darin zu sehen, daß durch die aus einer mit einem Aufnahmeabschnitt versehene Halteplatte und einem Adapter gebildete Halteeinrichtung bei Nachlackier- oder Austauschvorgängen eine schnelle und einfache Montage und Demontage des Ultraschallwandlers erzielt wird, wobei die Halteeinrichtung von der sichtbaren Außenseite her klein baut und optisch unauffällig wirkt.

Durch den schnell entfernbaren Ultraschallwandler und den Adapter lassen sich das Außenteil und der Adapter im Reparaturfall und bei einer Sonderlackierung einfach lackieren, wobei ein optisch und lackierqualitativ einwandfreier Übergang zwischen der Öffnung des Außenteils und dem angrenzenden stirnseitigen Abschnitt des Adapters gegeben ist. Im Vergleich zu herkömmlichen Ausbildungen ist bei der erfindungsgemäßen Anordnung nur eine relativ kleine Öffnung am Außenteil erforderlich, was aus stylistischen Gründen vorteilhaft ist. Die Bauteile der Halteeinrichtung sind
einfach und kostengünstig fertigbar und durch die lösbaren Clipsverbindungen einfach montier- bzw. demontierbar.

Ein Ausführungsbeispiel der Erfindung ist in der Zeichnung dargestellt und wird im folgenden näher erläutert.

Es zeigen
- Fig. 1: eine perspektivische Ansicht von schräg hinten auf einen Personenkraftwagen mit einer mit Ultraschallwandlern versehenen Stoßfängerverkleidung,
- Fig. 2: einen Schnitt nach der Linie II-II der Fig. 1 in größerem Maßstab, der die Halterung eines Ultraschallwandlers zeigt und
- Fig. 3: in Explosionsdarstellung die Bauteile der Halteeinrichtung für die Ultraschallwandler.

Das durch einen Personenkraftwagen gebildete Kraftfahrzeug 1 weist unterhalb eines Heckdeckels 2 und von hinteren seitlichen Leuchteneinheiten 3 ein Außenteil 4 auf, das im Ausführungsbeispiel durch eine großflächige lackierte Stoßfängerverkleidung 5 gebildet wird. Die vorzugsweise aus lackiertem, thermoplastischen Kunststoff gefertigte Stoßfängerverkleidung 5 ist an beiden seitlichen Endbereichen bis an angrenzende Radhäuser 6 von hinteren Rädern 7 herangeführt. Zur Unterstützung des Fahrers beim Einparken sind am Außenteil 4 im Bereich von Öffnungen 8 jeweils Ultraschallwandler 9 angeordnet, die mittels Halteeinrichtungen 10 mit dem Außenteil 4 verbunden sind.

Jede Halteeinrichtung 10 setzt sich aus einer benachbart der Öffnung 8 vorgesehenen, an der Innenseite A des Außenteils 4 befestigten aufrechten Halteplatte 11 mit einem einstückig angeformten hohlkörperartigen Aufnahmeabschnitt 12 und einem in den Aufnahmeabschnitt 12 einsteckbaren und dort festlegbaren Adapter 13 zusammen, wobei der Adapter 13 den Ultraschallwandler 9 in sich aufnimmt. Der Adapter 13 bildet quasi ein Einbaugehäuse für den Ultraschallwandler 9. Die aus Kunststoff gefertigte Halteplatte 11 umfaßt einen etwa rechteckförmig ausgebildeten Grundkörper mit gerundeten Eckbereichen.

Im Bereich der Stirnseite 14 des Ultraschallwandlers 9 weist die Halteplatte 11 eine kreisrunde Öffnung 15 auf. Die Halteplatte 11 ist zumindest bereichsweise mit der Innenseite A der das Außenteil 4 bildenden Stoßfängerverkleidung 5 verklebt oder verschweißt. Dies kann beispielsweise durch ein zwischengeschaltetes doppelseitiges Klebeband 16 oder dergleichen erfolgen. Von der Grundplatte der Halteplatte 11 ist auf der der Stoßfängerverkleidung 5 abgekehrten Seite der längliche hohlkörperartige Aufnahmeabschnitt 12 einstückig weggeführt. Der Aufnahmeabschnitt 12 weist prinzipiell einen hohlzylindrischen Querschnitt auf, wobei im oberen und unteren Bereich jeweils entsprechend der Ulstraschallwandlerform Aufweitungen 17 vorgesehen sind.

Der durch ein vorgefertigtes Bauteil gebildete Ultraschallwandler 9 ist in den zwischengeschalteten Adapter 13 einsteckbar und an diesem über zumindest eine lösbare Rastverbindung 18 festlegbar. Am Ultraschallwandler 9 ist außenseitig zumindest eine vorstehende Rastnase 19 angeordnet, die bei montiertem Ultraschallwandler 9 eine Aussparung 20 eines federnden Haltesteges 21 des Adapters 13 hintergreift.

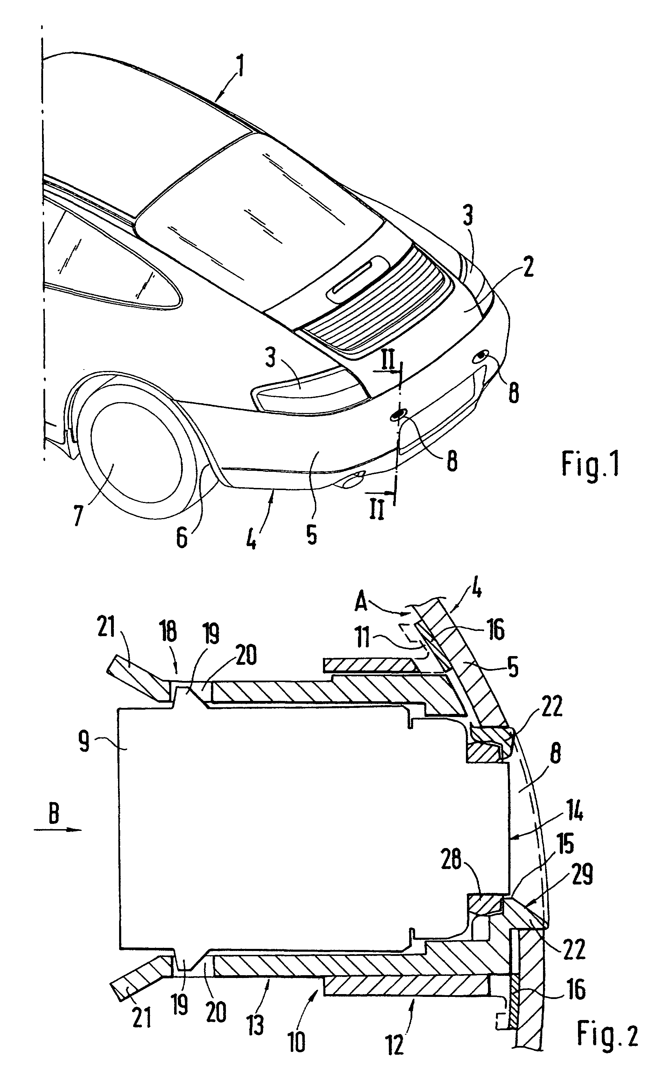

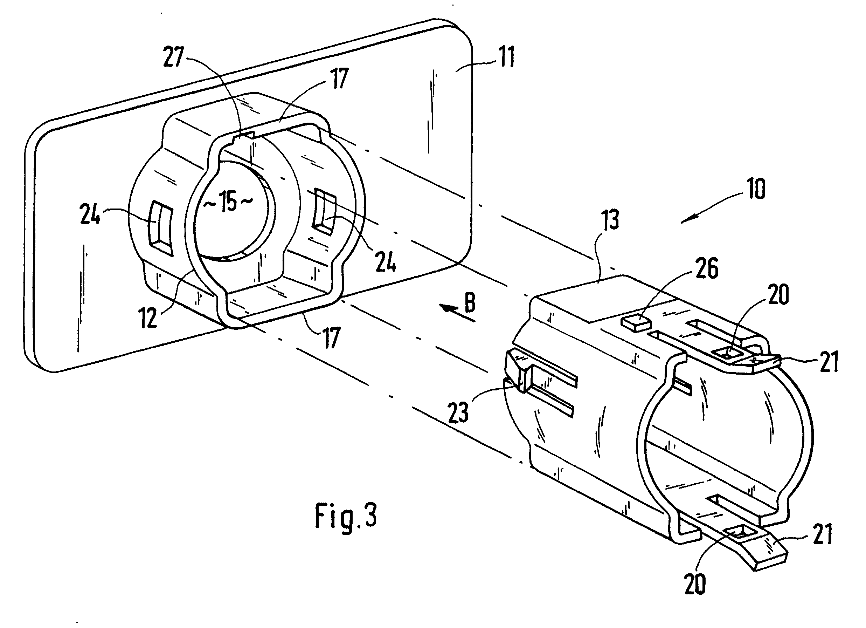

Gemäß den Figuren 2 und 3 sind am Adapter 13 zwei - in Höhenrichtung gesehen - beabstandete federnde Haltestege 21 mit jeweils einer rechteckförmigen Aussparung 20 ausgebildet, wobei in die Aussparungen 20 korrespondierende Rastnasen 19 des Ultraschallwandlers 9 eingreifen. Durch manuelles Aufspreizen der Haltestege 21 nach außen wird die clipsartige Rastverbindung 19 gelöst und der Ultraschallwandler 9 läßt sich wieder vom Adapter 13 trennen. In Einschubrichtung B gesehen sind die Rastnasen 19 in einem hinteren Bereich des Ultraschallwandlers 9 angeordnet. Der Adapter 13 mit dem eingesetzten Ultraschallwandler 9 wird von der Rückseite der Stoßfängerverkleidung 5 her in den Aufnahmeabschnitt 12 der Halteplatte 11 eingesetzt. Ein der Stoßfängerverkleidung 5 zugekehrter Endbereich 22 des Adapters 13 durchsetzt die Öffnung 8 an der Stoßfängerverkleidung 5 und steht gegenüber dieser geringfügig vor (Fig. 2). Der benachbart der Stirnseite 14 verlaufende Membranebereich des Ultraschallwandlers 9 ist über einen radialen Entkoppelungsring 28 vom Adapter 13 entkoppelt.

Während die Stirnseite 14 des Ultraschallwandlers 9 im Ausführungsbeispiel etwa kreisförmig ausgebildet ist, kann die Öffnung 8 an der Stoßfängerverkleidung 5 bedingt durch die Konturvorgabe eine etwa elliptische Form aufweisen. Die Außenseite des Adapters 13 schließt im Bereich der Öffnung 8 nahezu bündig, vorzugsweise minimal überstehend, an diese an. Vorzugsweise sind die Stoßfängerverkleidung 5 (evtl. Stanzloch ausgenommen) und der an die Öffnung 8 angrenzende Endbereich 22 des Adapters 13 in Wagenfarbe oder einer anderen Farbe lackiert. Zur lösbaren Festlegung des Adapters 13 am Aufnahmeabschnitt 12 der Halteplatte 11 sind am Adapter 13 federnde Rastnasen 23 ausgebildet, die bei eingesetztem Adapter 13 korrespondierende Aussparungen 24 am Aufnahmeabschnitt 12 hintergreifen. Gemäß Fig. 3 sind an beiden seitlichen Abschnitten des Adapters 13 federnde Rastnasen 23 und am Aufnahmeabschnitt 12 entsprechende Aussparungen 24 vorgesehen. Die Außenform des Adapters 13 ist der Innenkontur des Aufnahmeabschnitts 12 angepaßt. Der Adapter 13 überragt den Aufnahmeabschnitt 12 in Längsrichtung. Zur axialen Führung bzw. Verdrehsicherung des Adapters 13 beim Einsetzen kann zwischen beiden Bauteilen 12, 13 eine Führungseinrichtung 25 vorgesehen sein. Diese umfaßt gemäß Fig. 3 einen am Adapter 13 ausgebildeten vorstehenden Abschnitt 26, der mit einer entsprechenden Nut 27 des Aufnahmeabschnitts 12 zusammenwirkt.

Etwa von der Ebene der Stirnseite 14 des Ultraschallwandlers 9 aus erstreckt sich eine umlaufende schrägverlaufende Wandung 29 des Endbereiches 22 nach außen hin in Richtung Stoßfängerverkleidung 5 in Mindestgröße der Abhängigkeit von Streuwinkelaustritt des Ultraschallwandlers 9 zur evtl. unlackierten Stanzkantenöffnung 8 an der Stoßfängerverkleidung 5.

## Patentansprüche

1. Halteeinrichtung (10) für einen Ultraschallwandler (9) an einem Außenteil eines Kraftfahrzeuges, insbesondere an einem Stoßfänger, wobei am Außenteil im Bereich jedes Ultraschallwandlers eine Öffnung (8) vorgesehen ist und die Halteeinrichtung (10) eine sich benachbart der Öffnung erstreckende, an der Innenseite des Außenteils befestigte Halteplatte (11) mit einem angeformten hohlkörperartigen Aufnahmeabschnitt (12) umfasst, wobei die Halteeinrichtung (10) zusätzlich einen Adapter (13) umfasst, der zur Aufnahme des Ultraschallwandlers (9) vorgesehen ist, der einerseits den Ultraschallwandler (9) in sich aufnimmt und andererseits in den angeformten hohlkörperartigen Aufnahmeabschnitt (12) der Halteeinrichtung eingesteckt und mit dem Aufnahmeabschnitt (12) über eine lösbare Rastverbindung (18) festgelegt ist,
**dadurch gekennzeichnet, dass** der durch ein vorgefertigtes Bauteil gebildete Ultraschallwandler (9) in den zwischengeschalteten Adapter (13) einsteckbar ist und zwischen Adapter (13) und Ultraschallwandler (9) zumindest eine lösbare Rastverbindung vorgesehen ist.

2. Halteeinrichtung nach Anspruch 1, **dadurch gekennzeichnet, dass** am Ultraschallwandler (9) zumindest eine vorstehende Rastnase (19) angeordnet ist, die bei montiertem Ultraschallwandler (9) eine Aussparung (20) eines federnden Haltesteges (21) des Adapters (13) hintergreift.

3. Halteeinrichtung nach einem der vorangegangenen Ansprüche, **dadurch gekennzeichnet, dass** der Adapter (13) mit dem eingesetzten Ultraschallwandler (9) von der Rückseite einer Stoßfängerverkleidung (5) her in den Aufnahmeabschnitt (12) der Halteplatte (11) eingesetzt ist oder dass der Ultraschallwandler (9) in den am Aufnahmeabschnitt (12) vormontierten Adapter (13) eingesetzt ist.

4. Halteeinrichtung nach einem der vorangegangenen Ansprüche, **dadurch gekennzeichnet, dass** ein der Stoßfängerverkleidung (5) zugekehrter Endbereich des Adapters (13) die Öffnung (8) an der Stoßfängerverkleidung (5) durchsetzt und gegenüber der Außenkontur der Stoßfängerverkleidung (5) geringfügig vorsteht.

5. Halteeinrichtung nach Anspruch 4, **dadurch gekennzeichnet, dass** zumindest der an die Öffnung (8) angrenzende Endbereich (22) des Adapters (13) in der gleichen oder einer anderen Farbe lackiert ist wie die angrenzende Stoßfängerverkleidung (5).

6. Halteeinrichtung nach einem der vorangegangenen Ansprüche, **dadurch gekennzeichnet, dass** am Adapter (13) seitlich federnde Rastnasen (23) ausgebildet sind, die bei eingesetztem Adapter (13) korrespondierende Aussparungen (24) am Aufnahmeabschnitt (12) hintergreifen.

7. Halteeinrichtung nach einem der vorangegangenen Ansprüche, **dadurch gekennzeichnet, dass** zum Einsetzen des Adapters (13) in den Aufnahmeabschnitt (12) zumindest eine Führungseinrichtung (25) zwischen beiden Bauteilen (12, 13) vorgesehen ist.

## Claims

1. A retaining device (10) for an ultrasonic transducer (9) on an external part of a motor vehicle, in particular on a bumper, wherein an opening (8) is provided in the external part in the region of each ultrasonic transducer and the retaining device (10) comprises a retaining plate (11) extending adjacent to the opening and fastened to the inside of the external part and having an integrally formed hollow-body-like receiving portion (12), wherein the retaining device (10) additionally comprises an adapter (13) which is provided for receiving the ultrasonic transducer (9) [and] which on the one hand receives the ultrasonic transducer (9) in itself and on the other hand is inserted into the integrally formed hollow-body-like receiving portion (12) of the retaining device and is fastened to the receiving portion (12) by way of a releasable catch connexion (18), **characterized in that** the ultrasonic transducer (9) formed by a pre-fabricated component is capable of being inserted into the interposed adapter (13), and at least one releasable catch connexion is provided between the adapter (13) and the ultrasonic transducer (9).

2. A retaining device according to Claim 1, **characterized in that** at least one protruding catch projection (19), which engages behind an aperture (20) in a resilient retaining web (21) of the adapter (13) when the ultrasonic transducer (9) is assembled, is arranged on the ultrasonic transducer (9).

3. A retaining device according to one of the preceding Claims, **characterized in that** the adapter (13) together with the inserted ultrasonic transducer (9) is inserted from the rear side of a bumper covering (5) into the receiving portion (12) of the retaining plate (11), or the ultrasonic transducer (9) is inserted into the adapter (13) assembled beforehand on the receiving portion (12).

4. A retaining device according to one of the preceding Claims, **characterized in that** an end region of the adapter (13) facing the bumper covering (5) passes through the opening (8) in the bumper covering (5) and projects slightly with respect to the external outline of the bumper covering (5).

5. A retaining device according to Claim 4, **characterized in that** at least the end region (22) of the adapter (13) adjacent to the opening (8) is painted in the same or a different colour to the adjacent bumper covering (5).

6. A retaining device according to one of the preceding Claims, **characterized in that** laterally resilient catch projections (23), which engage behind corresponding apertures (24) in the receiving portion (12) when the adapter (13) is inserted, are formed on the adapter (13).

7. A retaining device according to one of the preceding Claims, **characterized in that**, in order to insert the adapter (13) into the receiving portion (12), at least one guide device (25) is provided between the two components (12, 13).

## Revendications

1. Dispositif de support (10) pour un convertisseur d'ultrasons (9) sur un partie extérieure d'un véhicule automobile, notamment un pare-chocs, une ouverture (8) étant prévue sur la partie extérieure dans la zone de chaque convertisseur d'ultrasons et le dispositif de support (10) comprenant une plaque de support (11) s'étendant au voisinage de l'ouverture, fixée sur le côté intérieur de la partie extérieure, avec une section de réception (12) formée sur elle en forme de corps creux, le dispositif de support (10) comportant en outre un adaptateur (13) prévu pour recevoir le convertisseur d'ultrasons (9), qui d'une part reçoit en lui le convertisseur d'ultrasons (9) et qui d'autre part est enfiché dans la section de réception (12) en forme de corps creux, formée sur la plaque, du dispositif de support et est fixé de façon détachable à la section de réception (12) au moyen d'un liaison à ergot (18).

2. Dispositif de support selon la revendication 1, **caractérisé en ce que** sur le convertisseur d'ultrasons (9) est disposé au moins un ergot d'encliquetage (19) saillant qui, lorsque le convertisseur d'ultrasons (9) est monté, passe derrière une découpe (20) d'une patte de support (21) élastique de l'adaptateur (13).

3. Dispositif de support selon l'une des revendications précédentes, **caractérisé en ce que** l'adaptateur (13) est inséré avec le convertisseur d'ultrasons (9) mis en place, depuis 1a face arrière d'un habillage de pare-chocs (5), dans la section de logement (12) de la plaque de support (11), ou **en ce que** le convertisseur d'ultrasons (9) est inséré dans l'adaptateur (13) prémonté sur la section de logement (12).

4. Dispositif de support selon l'une des revendications précédentes, **caractérisé en ce qu'**une zone terminale de l'adaptateur (13) tourné vers l'habillage du pare-chocs (5) traverse l'ouverture (8) sur l'habillage du pare-chocs (5) et dépasse légèrement par rapport au contour extérieur de l'habillage du pare-chocs (5).

5. Dispositif de support selon la revendication 4, **caractérisé en ce qu'**au moins la zone terminale (22) de l'adaptateur (13) voisine de l'ouverture (8) est peinte de la même couleur, ou d'une couleur différente, que l'habillage du pare-chocs (5).

6. Dispositif de support selon l'une des revendications précédentes, **caractérisé en ce que** des ergots d'accrochage (23) pourvu d'une élasticité latérale sont formés sur l'adaptateur (13), qui, lorsque l'adaptateur (13) est monté, s'accrochent derrière des évidements correspondants (24) sur la section de logement (12).

7. Dispositif de support selon l'une des revendications précédentes, **caractérisé en ce qu'**il est prévu au moins un dispositif de guidage (25) entre les deux pièces (12, 13) pour installer l'adaptateur (13) dans la section de logement (12).
